# EUROPÄISCHE PATENTSCHRIFT

(11) **EP 1 541 864 B1**
(45) Veröffentlichungstag und Bekanntmachung des Hinweises auf die Patenterteilung: **05.09.2007**
(21) Anmeldenummer: 04028291.5
(22) Anmeldetag: 30.11.2004
(51) Int. Cl.: F02N 11/08

(54) **Verfahren zum selbsttätigen Start eines Verbrennungsmotors**
Method for the automatic start of an internal combustion engine
Méthode pour le démarrage automatique d'un moteur à combustion interne

(30) Priorität: 11.12.2003 DE 10357933
(43) Veröffentlichungstag der Anmeldung: 15.06.2005
(73) Patentinhaber: DaimlerChrysler AG, 70327 Stuttgart (DE)
(72) Erfinder: Braun, Harald, Dr.-Ing., 73734 Esslingen (DE); Scholt, Torsten, Dr.-Ing., 70193 Stuttgart (DE); Schondelmaier, Andreas, 71729 Erdmannshausen (DE); Schorpp, Matthias, 73732 Esslingen (DE)

(56) Entgegenhaltungen:
- EP-A- 0 992 678
- EP-A- 1 063 424
- DE-A1- 10 023 331
- DE-C1- 10 211 462
- US-B1- 6 629 515

## Beschreibung

Die Erfindung betrifft ein Verfahren und eine Vorrichtung zum Wiederanlassen eines Verbrennungsmotors in einem Kraftfahrzeug, wobei der Motor in bestimmten Fahrbetriebszuständen zur Kraftstoffverbrauchseinsparung zeitweise ausgeschaltet wird und bei der Wiederaufnahme des Fahrbetriebs selbsttätig wieder gestartet werden soll, ohne dass hierzu der Fahrzeugführer mit seinem Zündschlüssel den Anlasser zu betätigen braucht.

Eine gattungsgemäße Vorrichtung und ein gattungsgemäßes Verfahren zum selbsttätigen Start eines Verbrennungsmotors ist aus der Europäischen Patentschrift EP 10 63 424 B1 bekannt. Bei dieser vorbekannten Vorrichtung und dem vorbekannten Verfahren wird die Stellung des Bremspedales mittels geeigneter Sensoren erfasst. Wird das Bremspedal aus seiner betätigten Stellung kommend vom Fahrzeugführer wieder losgelassen, so wird der Verbrennungsmotor des Kraftfahrzeugs selbsttätig dann gestartet, wenn sich das Bremspedal seiner unbetätigten Ausgangsstellung nähert. Gegenüber anderen ebenfalls vorbekannten Start-Stopp-Einrichtungen für Verbrennungsmotoren hat dies den Vorteil, dass der Fahrzeugführer das Wiederanlassen des Verbrennungsmotors als wesentlich spontaner empfindet.

Ausgehend von dem vorbeschriebenen Stand der Technik stellt sich die erfindungsgemäße Aufgabe eine noch verbesserte Lösung anzugeben, mit der der Fahrzeugführer die Start-Stopp-Einrichtung als noch angenehmer empfindet und die Akzeptanz der erfindungsgemäßen Start-Stopp-Einrichtung erhöht wird.

Die Lösung gelingt mit einem Verfahren und einer Vorrichtung entsprechend der unabhängigen Ansprüche. Vorteilhafte Ausgestaltungen der Erfindung sind in den Unteransprüchen und in den Ausführungsbeispielen aufgezeigt.

Die Lösung gelingt hauptsächlich mit einer Bremsdrucküberwachung und einer Auswertung des Bremsdruckes hinsichtlich seines zeitlichen Verlaufs. Ausgewertet wird der Bremsdruckgradient beim Lösen den Bremspedals vor dem Wiederanfahren des Fahrzeugs. Übersteigt der Betrag des negativen Bremsdruckgradienten beim Lösen der Bremsen einen Schwellwert, so wird diese Schwellwertüberschreitung von einer Steuerungselektronik im Kraftfahrzeug zum Anlass genommen, den Verbrennungsmotor im Zusammenhang mit einer Start-Stopp-Funktion wieder zu starten. Der damit hauptsächlich erzielte Vorteil liegt darin, dass der Bremsdruckgradient dem Erreichen des Bremspedals in seiner Ruhestellung zeitlich vorausgeht, so dass das Wiederstarten des Verbrennungsmotors von einem Fahrzeugführer spontaner empfunden werden kann, als im vorbekannten Stand der Technik. Es steht mit der erfindungsgemäßen Lösung für das Wiederanlassen des Verbrennungsmotors eine größere Zeitspanne zur Verfügung als bei einer Start-Stopp-Funktion wie aus der Europäischen Patentschrift EP 10 63 424 B1 bekannt ist. Damit wird es möglich den Wiederstart des Verbrennungsmotors im Unterschied zum vorbekannten Stand der Technik so früh einzuleiten, dass wenn der Fahrzeugführer wieder losfahren will, der Motor bereits wieder vollständig gestartet ist. Bei den Start-Stopp-Funktionen aus dem vorbekannten Stand der Technik steht für den Wiederstart des Verbrennungsmotors lediglich diejenige Zeitspanne zur Verfügung, die der Fahrzeugführer braucht, um seinen Fuß vom Bremspedal auf das Gaspedal zu wechseln. Diese Zeitspanne ist in der Regel zu kurz, was dazu führt, dass Vorkehrungen getroffen werden müssen, dass das Fahrzeug nicht starten kann, bevor der Verbrennungsmotor gestartet ist. Dies hat bisher zu erheblichen Akzeptanzproblemen von Start-Stopp-Funktionen in Kraftfahrzeugen geführt.

Ein weiterer Vorteil der Erfindung liegt in der Möglichkeit, den Wiederstart des Verbrennungsmotors adaptiv auf den jeweiligen Fahrzeugführer durchzuführen. Hierzu kann in die Erkennung ob der Bremsdruckgradient einen vorgegebenen Schwellwert überschritten hat zum Beispiel die Fahrertypklassifizierung, wie sie in modernen Kraftfahrzeugen zum Beispiel aus adaptiven Automatikgetrieben eingeführt ist, mit einbezogen werden. Die Adaption auf den jeweiligen Fahrzeugführer wird aber auch bereits vom Bremsdruckgradienten selbst unterstützt, da der Bremsdruckgradient davon abhängig ist, wie schnell der Fahrzeugführer das Bremspedal loslässt. Dies hat auch den Vorteil, dass der Wiederstart des Verbrennungsmotors situationsgerecht angepasst werden kann. Lässt der Fahrzeugführer das Bremspedal schnell los, so startet der Verbrennungsmotor früher, während wenn der Fahrzeugführer das Bremspedal nur langsam entlastet, der Bremsdruckgradient eher gering bleibt, so dass der Verbrennungsmotor erst dann gestartet zu werden braucht, wenn der Bremsdruck selbst einen Schwellwert unterschreitet.

In einem anderen vorteilhaften Ausführungsbeispiel kann der Fahrzeugführer wählen, ob er sich der automatischen Start-Stopp-Funktion bedienen will oder nicht. Er hat hierzu die Möglichkeit mittels eines Schaltmittels die Funktion zum selbständigen Start des Verbrennungsmotors ein- und auszuschalten.

In einem anderen vorteilhaften Ausführungsbeispiel können zusätzliche Sensoren mit in die Wiederstarterkennung einbezogen werden, die verhindern, dass der Wiederstart des Verbrennungsmotors durchgeführt wird. Dies kann zum Beispiel aus Sicherheitsgründen erforderlich sein, wenn die Motorhaube des Kraftfahrzeugs geöffnet ist, das Fahrzeug in einen Unfall verwickelt ist oder wenn die Restladung der Starterbatterie nicht mehr ausreicht, um noch mehrere Wiederstarts des Verbrennungsmotors durchzuführen.

Ohne Beschränkung der Allgemeinheit wird im Folgenden anhand von Figuren auf Ausführungsbeispiele der Erfindung näher eingegangen.

Es zeigen:
- Fig. 1: Eine Übersichtsskizze für das Zusammenwirken der verschiedenen Bestandteile einer Start-Stopp-Funktion in einem Kraftfahrzeug,
- Fig. 2: einen Funktionsrahmen zur Bestimmung des Bremsdruckgradienten,
- Fig. 3: einen Funktionsrahmen mit Fahrertypklassifizierung,
- Fig. 4: einen Funktionsrahmen für eine Startverhinderung,
- Fig. 5: die zeitliche Abfolge von Bremsdruck und Bremsdruckgradienten.

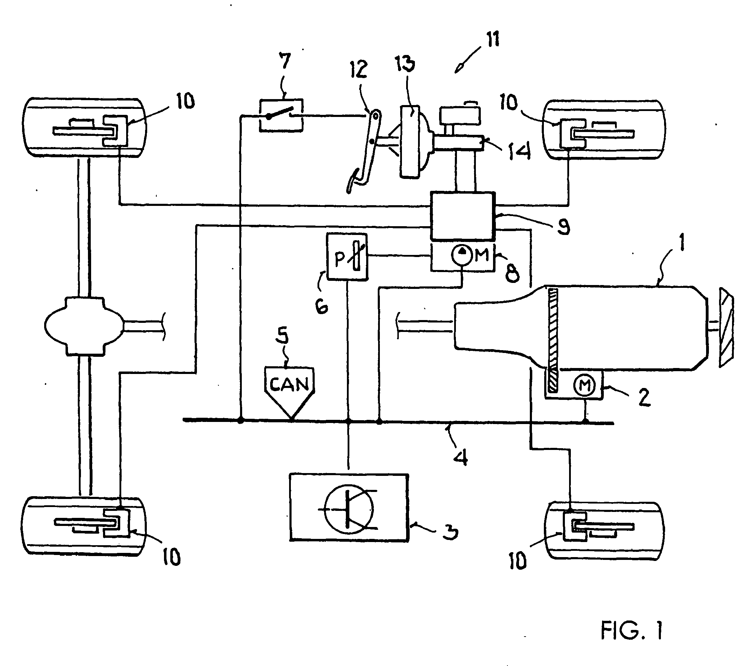

Die Funktionsweise eines Verfahrens zum selbständigen Start eines Verbrennungsmotors wird im Folgenden anhand von Figur 1 näher erläutert. Ein Verbrennungsmotor 1 wird in an sich bekannter Weise mit einem elektrischen Starter 2 gestartet. Alternative Startmöglichkeiten/Starter sind: Starter-Generatoren auf der Kurbelwelle integriert (ISG) oder über Riementrieb (RSG))und elektrische Maschinen bei Hybridfahrzeugen, z.B. eine mit der Kurbelwelle verbundene elektrische Maschine. Die Startsequenz für den elektrischen Starter 2 wird von einem Steuergerät 3 über eine Kommunikationsverbindung 4 übermittelt. Vorzugsweise wird in dem Kraftfahrzeug ein CAN-Bus-System zur Kommunikation zwischen verschiedenen elektrischen und elektronischen Einheiten im Kraftfahrzeug eingesetzt. An den CAN-Bus 5 sind weitere für die Erfindung wichtige Einheiten angeschlossen. So steht das Steuergerät 3 mit einem Bremsdrucksensor 6, mit dem Hauptbremsschalter 7, mit dem Starter 2, und mit der Hydraulikpumpe 8 eines Hydraulikaggregates 9 in Verbindung. Hydraulikpumpe 8 und Hydraulikaggre-gat 9 liefern und verteilen den Bremsdruck auf die Radbremsen 10 des Kraftfahrzeugs. Mit welchem Bremsdruck die Radbremsen zu betätigen sind, wird mit einem Bremsdruckgeber 11, üblicherweise bestehend aus einem Bremspedal 12, einem Bremsdruckverstärker 13 sowie einem Tandemhauptbremszylinder 14, vorgegeben. Die Bremsdruckvorgabe erfolgt hierbei von einem Fahrzeugführer durch Betätigen des Bremspedals 12. Ob das Bremspedal 12 betätigt wurde, wird mit dem Hauptbremsschalter 7 überwacht und festgestellt. Wurde das Bremspedal 12 betätigt, übermittelt der Hauptbremsschalter 7 ein entsprechendes CAN-Signal an das Steuergerät 3. Entsprechend der Bremsdruckvorgabe wird mit dem Steuergerät 3 über die Ansteuerung der Hydraulikpumpe 8 der Bremsdruck an den Radbremsen eingestellt. Hierzu ist eine permanente Bremsdrucküberwachung und eine entsprechende Bremsdruckregelung in dem Steuergerät 3 implementiert. Die Bremsdrucküberwachung erfolgt hierbei über den Bremsdrucksensor 6, der an geeigneter Stelle den Bremsdruck in den Hydraulikleitungen des Bremssystems abgreift.

So weit wie bisher beschrieben greift die Erfindung auf an sich bekannte Kraftfahrzeugsysteme zurück. Die Erfindung besteht nun darin, aus der Bremsdrucküberwachung einen Bremsdruckgradienten zu ermitteln. Dieser zeitliche Bremsdruckgradient wird seinem Betrag nach mit einem Schwellwert verglichen und daraus ein Entscheidungskriterium gewonnen, wann vom Steuergerät 3 eine Startsequenz in Form eines Start-Bits an den Starter 2 des Verbrennungsmotors gesendet werden soll, damit der Verbrennungsmotor in diesem Sinne selbsttätig gestartet wird. Praktisch bedeutet dies, dass überwacht wird, wie schnell ein Fahrzeugführer seinen Fuß vom Bremspedal 12 nimmt. Nimmt der Fahrzeugführer seinen Fuß hinreichend schnell vom Bremspedal 12, so wird sich der Bremsdruck mit entsprechend großen Bremsdruckgradienten abbauen. Durch Vorgabe eines Schwellwertes, mit dem der Bremsdruckgradient verglichen wird, kann ein geeignetes Kriterium etabliert werden, wann der Verbrennungsmotor zu starten ist. Da der Bremsdruckgradient zeitlich dem Erreichen des Bremspedals in der unbetätigten Ruhestellung vorauseilt, gewinnt man gegenüber herkömmlichen Verfahren, mehr Zeit um den Verbrennungsmotor selbsttätig zu starten. Die notwendigen Auswertealgorithmen sind hierbei als Anwendungsprogramme in dem elektronischen Steuergerät 3 implementiert.

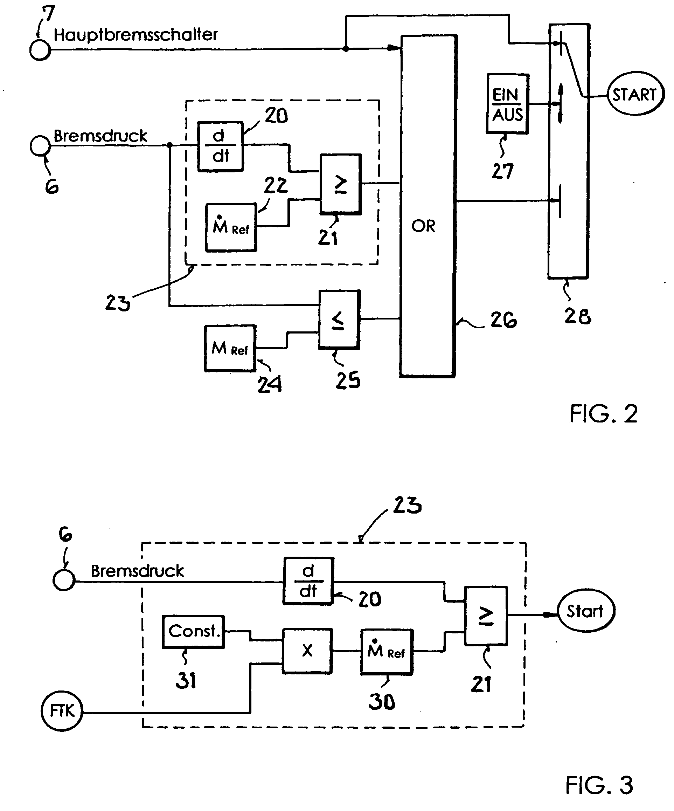

Ein Funktionsschema für das zuvor angesprochene Anwendungsprogramm zeigt Figur 2. Das von dem Drucksensor 6 an das Steuergerät 3 übermittelte Signal für den Bremsdruck wird mittels Datenverarbeitung einer zeitlichen Ableitung 20 unterzogen, und der daraus resultierende Bremsdruckgradient auf sein Vorzeichen und auf seinen Betrag hin überprüft. Ist der Bremsdruckgradient negativ, das heißt nimmt der Bremsdruck ab, so wird der Betrag dieser Abnahme einer Vergleichsoperation 21 zugeführt, in der verglichen wird, ob der Betrag der Bremsdruckabnahme einen vorgegebenen Schwellwert 22 übersteigt oder nicht. Übersteigt der Betrag des Bremsdruckgradienten den vorgegebenen Schwellwert, so wird aus der Gradientenauswertung 23 ein Startsignal erzeugt und weitergegeben. Das Startsignal wird vorzugsweise in Form eines Starter-Bits auf den CAN-Bus des Kommunikationsnetzwerks im Fahrzeug gegeben. Im Ausführungsbeispiel der Figur 2 ist das Startsignal aus der Gradientenauswertung 23 mit weiteren redundantmöglichen Startbedingungen verodert. Weitere Bedingungen für das Erzeugen eines Startsignals sind das Unterschreiten des Bremsdrucks selbst unter einen Referenzwert 24. Hierzu wird der Bremsdruck mit einer Vergleichsoperation 25 mit dem Schwellwert für den Bremsdruck verglichen. Unterschreitet der Bremsdruck den vorgegebenen Schwellwert, so wird ebenfalls ein Startsignal erzeugt. Als dritte Möglichkeit selbsttätig ein Startsignal zu erzeugen wird das Signal des Hauptbremsschalters 7 heran gezogen. Erreicht das Bremspedal seine nicht betätigte Ruhestellung, so wird das mit dem Hauptbremsschalter 7 detektiert und in dem Steuergerät 3 ein Startsignal ausgelöst. Die drei möglichen Bedingungen für das Auslösen eines Startsignals über den Hauptbremsschalter 7, über die Gradientenauswertung 23 sowie über den Bremsdruckvergleich 25 werden in einer Oder-Operation 26 miteinander verodert, so dass grundsätzlich ein Startsignal auf den CAN-Bus gegeben werden kann, wenn mindestens einer der drei zuvor genannten Bedingungen vorliegt.

Das Ergebnis aus dem Signalvergleich der Oder-Operation 26 das selbsttätige Starten des Verbrennungsmotors mittels Bremsdrucküberwachung und Gradientenauswertung kann vom Fahrzeugführer auch ausgeschaltet werden. Durch Betätigen eines Schaltelementes 27, das als Bedienelement im Fahrzeuginnenraum angebracht ist, kann der Fahrzeugführer entscheiden, ob er die Bremsdrucküberwachung in Anspruch nehmen will oder nicht. Je nach Stellung des Schaltelements 27 wird die Bremsdrucküberwachung für den selbsttätigen Start des Verbrennungsmotors herangezogen oder nicht. Ist die Bremsdrucküberwachung ausgeschaltet, so kann dennoch ein selbstständiges Starten des Verbrennungsmotors erfolgen, in dem lediglich das Signal des Hauptbremsschalters in an sich bekannter Weise ausgewertet wird. Der Verbrennungsmotor startet dann, wenn das Bremspedal aus seiner betätigten Stellung in seine nicht betätigte Ruhestellung zurückgeht. Das Ein- und Ausschalten der Bremsdrucküberwachung für die Erzeugung eines Startsignals ist vorzugsweise Softwaremäßig mit einem logischen Schaltmittel 28 realisiert. Das logische Schaltmittel 28 besteht dabei aus einer logischen Programmabfrage, welches Signal in Abhängigkeit der Stellung des Ein-/Ausschalters 27 letztendlich für den Start des Verbrennungsmotors heranzuziehen ist. Je nach Stellung des Schalters 27 ist entweder nur das Signal aus dem Hauptbremsschalter heranzuziehen oder es ist das Signal aus der Oder-Operation 26, die die Bremsdrucküberwachung enthält, für den Start des Verbrennungsmotors heranzuziehen.

Die im Zusammenhang mit Figur 2 bereits beschriebene Gradientenauswertung 23 kann auch adaptiv ausgeführt werden. Ein Beispiel für eine adaptiv ausgeführte Gradientenauswertung 23 ist in dem Funktionsdiagramm der Figur 3 veranschaulicht. Die Auswertung des Bremsdrucks beziehungsweise des Bremsdrucksignals aus dem Drucksensor 6 erfolgt in analoger Weise wie in Figur 2. Es wird ein Bremsdruckgradient gebildet und der Bremsdruckgradient hinsichtlich Vorzeichen und Betrag ausgewertet. Bei negativen Vorzeichen wird der Betrag des Bremsdruckgradienten einer Vergleichsoperation 21 zugeführt, in der dieser Betrag mit einem Referenzwert verglichen wird. Im Unterschied zu dem Ausführungsbeispiel der Figur 2 ist jedoch dieser Referenzwert 30 nun durch die Fahrertypklassifizierung beeinflussbar und veränderbar. Fahrertypklassifizierungen sind aus adaptiven Automatikgetrieben beziehungsweise aus Steuerungen zu adaptiven Automatikgetrieben bekannt. Sie klassifizieren den Fahrer hinsichtlich seiner sportlichen Neigungen mit einem Wert von beispielsweise 0 bis 255. Diese an sich bekannten Fahrertypklassifizierungen werden nun bei der Erfindung mit herangezogen, um aus der Gradientenauswertung 23 ein Startsignal zu erzeugen. Der Referenzwert, mit dem der Betrag des Bremsdruckgradienten verglichen wird, wird hierbei aus dem vielfachen einer Grundkonstanten 31 gebildet, wobei diese Grundkonstante 31 mit dem Zahlenwert der Fahrertypklassifizierung multipliziert wird und dieses Produkt den Referenzwert 30 bildet, der in die Vergleichsoperation 21 eingeht. Übersteigt der Betrag des Bremsdruckgradienten den dermaßen ermittelten Referenzwert, so wird aus der Gradientenauswertung 23 ein Startsignal erzeugt. Sportliche Fahrer werden in der Regel den Fuß schneller vom Bremspedal nehmen, so dass bei ihnen die Beträge der Bremsdruckgradienten größer sind als weniger sportliche Fahrer. Für sportliche Fahrer empfiehlt sich daher ein größerer Referenzwert. Da es ansonsten aus Sicht des sportlichen Fahrers durch die Gradientenauswertung zu Fehlinterpretationen kommen kann.

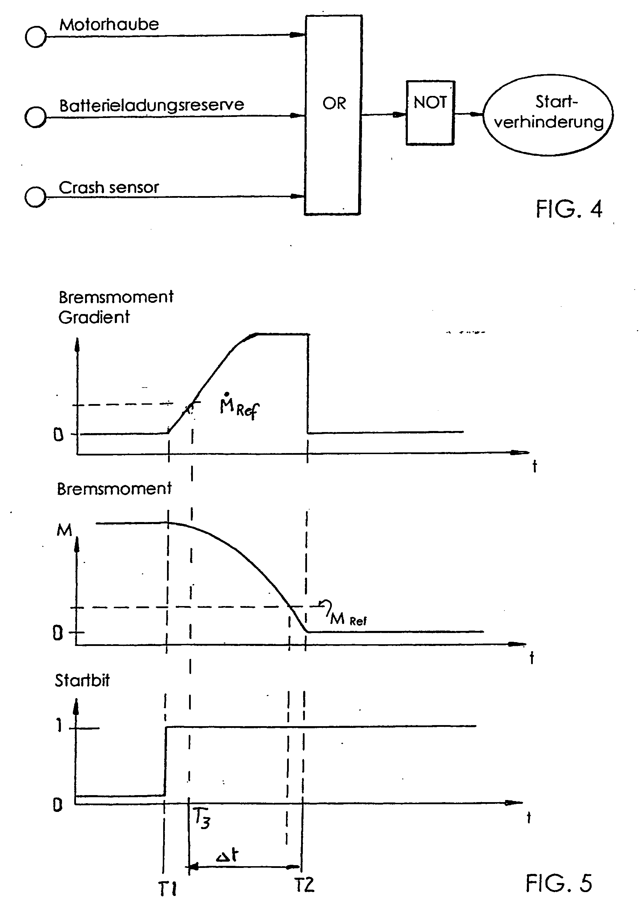

Figur 4 nimmt Bezug auf einen Sicherheitsaspekt. Unter bestimmten ausgewählten Bedingungen soll ein Start des Verbrennungsmotors durch ein selbsttätiges Verfahren verhindert werden. Besonders ausgewählte Bedingungen, bei denen ein Start des Verbrennungsmotors selbsttätig verhindert werden muss, sind eine geöffnete Motorhaube, ein Unfall des Fahrzeugs, oder wenn die Ladungsreserve der Starterbatterie für ein mehrmaliges Starten des Verbrennungsmotors nicht mehr ausreicht. In diesen Fällen wird ein eventuell vorliegendes Starter-Bit, das aus einem der vorhergehenden Prozesse erzeugt wurde, negiert und damit ein selbsttätiger Startvorgang verhindert.

Das Vorliegen eines Unfalls wird in der Regel mit einem Crash-Sensor detektiert. Die geöffnete Motorhaube kann ebenfalls mit einem geeigneten Sensor detektiert werden und die Überwachung der Starterbatterie auf eine Batterieladungsgrenze kann ebenfalls mit einer an sich bekannten Überwachung der Ladungsreserve erfolgen.

Figur 5 geht noch mal auf die Wirkungsweise der Erfindung ein. Dargestellt sind drei Zeitdiagramme, die auf eine gemeinsame Zeitbasis bezogen sind. Dargestellt sind der Verlauf des Bremsdruckgradienten, zeitlicher Verlauf des Bremsdrucks selbst und das Versenden eines Starter-Bits auf den Kommunikationsbus des Fahrzeugs. Zum Zeitpunkt T1 lässt der Fahrzeugführer das Bremspedal los. Am dem Zeitpunkt T1 wird sich das Bremsmoment an den Radbremsen verringern und schließlich ganz abbauen. Der Bremsdruck und damit das Bremsmoment ist zum Zeitpunkt T2 auf Null abgefallen. Bei einem Verfahren zum selbstständigen Start eines Verbrennungsmotors, wie es aus dem Stand der Technik bekannt ist, würde der Start des Verbrennungsmotors zum Zeitpunkt T2 initiiert werden. Die Gradientenauswertung des Bremsdrucks ermöglicht jedoch einen wesentlich früheren Start des Verbrennungsmotors. Ein auswertbarer Bremsdruckgradient liegt nämlich bereits zum Zeitpunkt T1, wenn der Fahrer beginnt, den Fuß vom Bremspedal zu nehmen, vor. Eine Schwellwertauswertung des Bremsdruckgradienten kann damit für den Start eines Verbrennungsmotors herangezogen werden. Damit kann der Start des Verbrennungsmotors mittels Signalauswertung des Bremsdruckgradienten sehr nahe an den Zeitpunkt T1, an dem der Fahrzeugführer die Bremse lösen will, herangezogen werden. Gegenüber dem Stand der Technik erzielt man somit mit der Erfindung ein Zeitintervall Δt zwischen den Zeitpunkten T3, an dem der Bremsdruckgradient einen vorgegebenen Schwellwert d/dtM_{Ref} überschreitet bis zum Abfallen des Bremsdrucks auf den Wert Null zum Zeitpunkt T2, das zusätzlich für den selbstständigen Start des Verbrennungsmotors herangezogen werden kann. Man hat also mit dem erfindungsgemäßen Verfahren einen Zeitvorteil gegenüber dem im Stand der Technik bekannten Verfahren.

## Patentansprüche

1. Verfahren zum selbsttätigen Start eines Verbrennungsmotors in einem Kraftfahrzeug, wobei der Verbrennungsmotor in bestimmten Fahrbetriebszuständen zur Kraftstoffeinsparung zeitweise ausgeschaltet wird und bei einem Wechsel des Fahrbetriebszustandes durch eine Bremspedalbetätigung wieder gestartet wird,
**dadurch gekennzeichnet,**
- **dass** von einem Steuergerät der hydraulische Bremsdruck mittels eines Drucksensors überwacht und ausgewertet wird
- und **dass** von dem Steuergerät, dann ein Startbit an den Starter des Verbrennungsmotors gesandt wird, wenn der Betrag des zeitlichen Bremsdruckgradienten beim Lösen der Bremsen einen Schwellwert übersteigt.

2. Verfahren nach Anspruch 1,
**dadurch gekennzeichnet,**
**dass** der Schwellwert mittels einer Fahrertypklassifizierung auf den jeweiligen Fahrzeugführer adaptiert wird.

3. Verfahren nach einem der Ansprüche 1 oder 2,
**dadurch gekennzeichnet,**
**dass** das Startbit an den Starter des Verbrennungsmotors gesandt wird, wenn mindestens eine der folgenden Bedingungen erfüllt ist:
- der Betrag des zeitlichen Bremsdruckgradienten beim Lösen der Bremsen einen Schwellwert übersteigt,
- der Bremsdruck beim Lösen der Bremsen einen Schwellwert unterschreitet,
- der Hauptbremsschalter betätigt wird und die Brems leuchten abgeschaltet werden.

4. Verfahren nach Anspruch 3,
**dadurch gekennzeichnet,**
**dass** die Bremsdrucküberwachung vom Fahrzeugführer mit einem Schaltmittel wahlweise zu- und abgeschaltet werden kann.

5. Verfahren nach einem der Ansprüche 1 bis 4,
**dadurch gekennzeichnet,**
**dass** der selbsttätige Start des Verbrennungsmotors verhindert wird, wenn mindestens eine der folgenden Bedingung erfüllt ist:
- die Motorhaube des Kraftfahrzeugs ist geöffnet,
- die Restladung der Starterbatterie unterschreitet eine Batterieladungsreserve,
- ein Crashsensor im Fahrzeug hat einen Unfall signali siert.

6. Vorrichtung zum selbsttätigen Start eines Verbrennungsmotors in einem Kraftfahrzeug, mit einem Steuergerät, einem elektrischen Starter, einem hydraulischen Bremssystems und einem Bremsdrucksensor, wobei das Steuergerät mit dem Starter und dem Bremsdrucksensor in Kommunikationsverbindung steht,
**dadurch gekennzeichnet,**
- **dass** das Steuergerät einen Startalgorithmus und eine Bremsdrucküberwachung in Form eines ablauffähigen Programms enthält und die Bremsdrucküberwachung aus den Signalen des Bremsdrucksensors den Betrag eines zeitlich abnehmenden Bremsdruckgradienten ermittelt und mit einem Schwellwert vergleicht,
- und **dass** mit dem Startalgorithmus, wenn der Betrag des abnehmenden Bremsdruckgradienten den Schwellwert über steigt, ein Startbit an den elektrischen Starter ge sandt wird.

7. Vorrichtung nach Anspruch 6,
**dadurch gekennzeichnet,**
**dass** das Steuergerät mit einer Fahrertypklassifizierung in Verbindung steht, und der Schwellwert auf den jeweiligen Fahrzeugführer adaptiert wird.

8. Vorrichtung nach einem der Ansprüche 6 oder 7,
**dadurch gekennzeichnet,**
**dass** das Startbit an den Starter des Verbrennungsmotors gesandt wird, wenn mindestens eine der folgenden Bedingungen erfüllt ist:
- der Betrag des zeitlichen Bremsdruckgradienten beim Lösen der Bremsen einen Schwellwert übersteigt,
- der Bremsdruck beim Lösen der Bremsen einen Schwellwert unterschreitet,
- der Hauptbremsschalter betätigt wird und die Brems leuchten abgeschaltet werden.

9. Vorrichtung nach Anspruch 8,
**dadurch gekennzeichnet,**
**dass** die Bremsdrucküberwachung vom Fahrzeugführer mit einem Schaltmittel wahlweise zu- und abgeschaltet werden kann.

10. Vorrichtung nach einem der Ansprüche 6 bis 9,
**dadurch gekennzeichnet,**
**dass** der selbsttätige Start des Verbrennungsmotors verhindert wird, wenn mindestens eine der folgenden Bedingung erfüllt ist:
- die Motorhaube des Kraftfahrzeugs ist geöffnet,
- die Restladung der Starterbatterie unterschreitet eine Batterieladungsreserve,
- ein Crashsensor im Fahrzeug hat einen Unfall signalisiert.

## Claims

1. A process for automatically starting an internal combustion engine in a motor vehicle, the internal combustion engine being switched off in certain operating modes at certain times in order to save fuel, and started again by a brake pedal actuation when the operating mode changes,
**characterised in that**
- the hydraulic brake pressure is monitored and evaluated by a control device using a pressure sensor,
- and the control device sends a start bit to the starter of the internal combustion engine when the amount of the brake pressure gradient over time when the brakes are released exceeds a threshold value.

2. A process in accordance with claim 1,
**characterised in that**
the threshold value is adapted to a given vehicle driver by means of a driver type classification system.

3. A process in accordance with claim 1 or 2,
**characterised in that**
the start bit is sent to the starter of the internal combustion engine if at least one of the following conditions is fulfilled:
- the amount of the brake pressure gradient over time when the brakes are released exceeds a threshold value,
- the brake pressure when the brakes are released falls below a threshold value,
- the main brake switch is actuated and the brake lights are switched off.

4. A process in accordance with claim 3,
**characterised in that**
the driver is able to switch the brake pressure monitoring system either on or off using switching means.

5. A process in accordance with one of claims 1 to 4,
**characterised in that**
automatic starting of the internal combustion engine is prevented if at least one of the following conditions if fulfilled:
- the engine cover of the internal combustion engine is open,
- the residual charge of the starter battery falls below a battery charge reserve level,
- a crash sensor in the vehicle has signalled an accident.

6. A device for automatically starting an internal combustion engine in a motor vehicle having a control device, an electrical starter, a hydraulic braking system and a brake pressure sensor, the control device being connected to the starter and the brake pressure sensor in such a manner that they are able to communicate with one another,
**characterised in that**
- the control device contains a start algorithm and a brake pressure monitoring system in the form of an executable program, and the brake pressure monitoring system determines the amount of a brake pressure gradient which decreases over time from the signals sent by the brake pressure sensor and compares it with a threshold value,
- using a start algorithm, if the amount of the decreasing brake pressure gradient exceeds the threshold value, a start bit is sent to the electrical starter.

7. A device in accordance with claim 6,
**characterised in that**
the control device is connected to a driver type classification system and the threshold value is adapted to the particular vehicle driver.

8. A device in accordance with one of claims 6 or 7,
**characterised in that**
the start bit is sent to the starter of the internal combustion engine if at least one of the following conditions is fulfilled:
- the amount of the brake pressure gradient over time when the brakes are released exceeds a threshold value,
- the brake pressure when the brakes are released falls below a threshold value,
- the main brake switch is actuated and the brake lights are switched off.

9. A device in accordance with claim 8,
**characterised in that**
the driver is able to switch the brake pressure monitoring system either on or off using switching means.

10. A device in accordance with one of claims 6 to 9,
**characterised in that**
the automatic starting of the internal combustion engine is prevented if at least one of the following conditions if fulfilled:
- the engine cover of the internal combustion engine is open,
- the residual charge in the starter battery falls below a battery charge reserve level,
- a crash sensor in the vehicle has signalled an accident.

## Revendications

1. Procédé pour le démarrage automatique d'un moteur à combustion interne dans un véhicule automobile, dans lequel le moteur à combustion interne est temporairement coupé dans certaines situations de fonctionnement pour économiser du carburant et est à nouveau démarré lors d'un changement de la situation de fonctionnement, par actionnement de la pédale de freinage,
**caractérisé en ce que**
- la pression de freinage hydraulique est surveillée au moyen d'un capteur de pression et évaluée par un appareil de commande, et
- un bit de démarrage est alors envoyé par l'appareil de commande au démarreur du moteur à combustion interne quand le montant du gradient de pression de freinage temporel dépasse une valeur seuil lors du relâchement des freins.

2. Procédé selon la revendication 1,
**caractérisé en ce que** la valeur seuil est adaptée au conducteur respectif du véhicule au moyen d'une classification de type de conducteur.

3. Procédé selon l'une des revendications 1 ou 2,
**caractérisé en ce que** le bit de démarrage est envoyé au démarreur du moteur à combustion interne lorsque l'une au moins des conditions suivantes est satisfaite :
- le montant du gradient de pression de freinage temporel lors du relâchement des freins dépasse une valeur seuil,
- la pression de freinage lors du relâchement des freins passe au-dessous d'une valeur seuil,
- le commutateur de freinage principal est actionné et les feux de freinage sont coupés.

4. Procédé selon la revendication 3,
**caractérisé en ce que** la surveillance de la pression de freinage peut être sélectivement enclenchée et coupée par le conducteur du véhicule au moyen d'un organe de commutation.

5. Procédé selon l'une des revendications 1 à 4,
**caractérisé en ce que** le démarrage automatique du moteur à combustion interne est empêché si l'une au moins des conditions suivantes est satisfaite :
- le capot moteur du véhicule automobile est ouvert,
- la charge résiduelle de la batterie de démarrage passe au-dessous d'une réserve de charge de batterie,
- un détecteur de collision dans le véhicule a signalisé un accident.

6. Dispositif pour le démarrage automatique d'un moteur à combustion interne dans un véhicule automobile, comprenant un appareil de commande, un démarreur électrique, un système de freinage hydraulique et un capteur de pression de freinage, l'appareil de commande étant en liaison de communication avec le démarreur et avec le capteur de pression de freinage,
**caractérisé en ce que**
- l'appareil de commande comprend un algorithme de démarrage et une surveillance de pression de freinage sous la forme d'un programme exécutable, et la surveillance de la pression de freinage détermine à partir des signaux du capteur de pression de freinage le montant d'un gradient de pression de freinage décroissant dans le temps et le compare à une valeur seuil,
- et **en ce qu'**au moyen de l'algorithme de démarrage, lorsque le montant du gradient de pression de freinage décroissant passe au-dessus de la valeur seuil, un bit de démarrage est envoyé au démarreur électrique.

7. Dispositif selon la revendication 6,
**caractérisé en ce que** l'appareil de commande est en liaison avec une classification de type de conducteur, et la valeur seuil est adaptée au conducteur respectif du véhicule.

8. Dispositif selon l'une des revendications 6 ou 7,
**caractérisé en ce que** le bit de démarrage est envoyé au démarreur du moteur à combustion interne si l'une au moins des conditions suivantes est satisfaite :
- le montant du gradient de pression de freinage temporel lors du relâchement des freins dépasse une valeur seuil,
- la pression de freinage lors du relâchement des freins passe au-dessous d'une valeur seuil,
- le commutateur de freinage principal est actionné et les feux de freinage sont coupés.

9. Dispositif selon la revendication 8,
**caractérisé en ce que** la surveillance de la pression de freinage peut être sélectivement enclenchée et coupée par le conducteur du véhicule au moyen d'un organe de commutation.

10. Dispositif selon l'une des revendications 6 à 9,
**caractérisé en ce que** le démarrage automatique du moteur à combustion interne est empêché si l'une au moins des conditions suivantes est satisfaite :
- le capot moteur du véhicule automobile est ouvert,
- la charge résiduelle de la batterie de démarrage passe au-dessous d'une réserve de charge de batterie,
- un détecteur de collision dans le véhicule a signalisé un accident.
